(19) Europäisches Patentamt
European Patent Office
Office européen des brevets

(11) Veröffentlichungsnummer: **0 160 621**
**B1**

(12) # EUROPÄISCHE PATENTSCHRIFT

(45) Veröffentlichungstag der Patentschrift: **09.08.89**

(21) Anmeldenummer: **85810180.1**

(22) Anmeldetag: **22.04.85**

(51) Int. Cl.[4]: **C 08 F283/10**, C 08 F299/02, C 08 G 59/40, C 08 G 59/66, C 08 G 59/62

(54) **Härtbare Zusammensetzungen.**

(30) Priorität: **28.04.84 GB 8410959**

(43) Veröffentlichungstag der Anmeldung: **06.11.85 Patentblatt 85/45**

(45) Bekanntmachung des Hinweises auf die Patenterteilung: **09.08.89 Patentblatt 89/32**

(84) Benannte Vertragsstaaten: **AT BE CH DE FR GB IT LI NL SE**

(56) Entgegenhaltungen:
**DE-A- 2 218 161**
**DE-B- 2 216 211**
**FR-A- 2 225 498**
**US-A- 4 160 178**
**Die Akte enthält technische Angaben, die nach dem Eingang der Anmeldung eingereicht wurden und die nicht in dieser Patentschrift enthalten sind.**

(73) Patentinhaber: **CIBA-GEIGY AG**
**Klybeckstrasse 141**
**CH-4002 Basel (CH)**

(72) Erfinder: **Irving, Edward, Dr.**
**41 Swaffham Road**
**Burwell Cambridge CB5 0AN (GB)**
Erfinder: **Smith, Terence James**
**6A Dickasons Melbourn**
**Royston Hertfordshire SG8 6EL (GB)**

**EP 0 160 621 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die vorliegende Erfindung betrifft härtbare Zusammensetzungen, insbesondere Klebstoffzusammensetzungen und deren Verwendung zum Verkleben von Oberflächen.

Eine Vielzahl von Klebmitteln für unterschiedliche Anwendungsgebiete ist bekannt. Benötigt man allerdings ein Klebmittel mit hoher Klebstärke und grosser Beständigkeit, also einen sogenannten Strukturkleber, so muss man sich mit Systemen zufrieden geben, die in irgendeiner Form Nachteile aufweisen.

Für einen speziellen Zweck muss daher stets eine Auswahl getroffen werden, bei der Vor- und Nachteile des jeweiligen Klebmittels gegeneinander abgewogen werden.

Epoxidharzkleber besitzen die Vorteile hoher Klebstärke, guter Beständigkeit, Wasser- und Chemikalienfestigkeit sowie hoher Wärmebeständigkeit. Von Nachteil ist allerdings, dass diese Klebstoffe langsam aushärten, solange sie nicht auf höhere Temperaturen erhitzt werden. Diese lange Härtungszeit begrenzt den Einsatz solcher Klebstoffe beispielsweise bei der Fahrzeugherstellung oder der Produktion von elektrotechnischen Artikeln.

Klebmittel auf Acrylatbasis, die durch radikalische Polymerisation gehärtet werden, härten rasch aus ; die erreichbare Klebstärke, die Hitze-, Wasser- oder Chemikalienbeständigkeit lässt aber häufig zu wünschen übrig.

Anaerobe Klebmittel, die in Abwesenheit von Sauerstoff von selbst polymerisieren, bei Anwesenheit von Sauerstoff hingegen für längere Zeiten lagerstabil bleiben, sind bekannt. Diese Klebmittel basieren in der Regel auf polymerisierbaren Acrylderivaten.

Solche anaeroben Klebstoffe sind im Vergleich zu anderen Klebstoffen auf Acrylharzbasis als Einkomponentenformulierungen verfügbar, und brauchen daher vor ihrem Einsatz nicht gemischt zu werden.

Die meisten anderen Acrylharzklebmittel werden getrennt vom Härter verkauft und gelagert, da die Härtung sogleich nach dem Mischen der Komponenten einsetzt.

Diese Klebstofftypen werden angewendet, indem das Harz auf eine der zu verklebenden Oberflächen aufgebracht wird und der Härter auf die zweite Oberfläche. Anschliessend werden beide Oberflächen miteinander in Kontakt gebracht.

Andere Kleber auf Acrylharzbasis enthalten Inhibitoren, die die Aktivität des radikalbildenden Härters beeinflussen. Man kann auf diese Weise also eine stabile Harz-/Härtermischung herstellen. Solche Mischungen beginnen allerdings nur dann auszuhärten, wenn sie mit einem Initiator des Katalysators oder des Co-Katalysators in Berührung gebracht werden, beispielsweise mit einem Aldehyd-Amin-Kondensationsprodukt.

Ueblicherweise bringt man diese Initiatoren auf eine der zu verbindenden Oberflächen auf, während die stabilisierte Acrylharz-/Härtermischung auf die zweite Oberfläche gegeben wird. Sobald beide Oberflächen miteinander kontaktiert werden, setzt in der Regel rasch die Durchhärtung ein. Hier handelt es sich also wieder um eine Formulierung, die in zwei Anteilen eingesetzt werden muss.

Anaerobe Klebmittel entwickeln in der Regel keine besonders hohen Klebstärken ; die Adhäsion der verklebten Teile ist im allgemeinen schwächer als die der oben beschriebenen Zweikomponentenkleber auf Acrylharzbasis.

Die praktischen Anwendungen von anaeroben Klebmitteln beschränken sich im wesentlichen auf Spezialgebiete, wie beispielsweise die Herstellung von Dichtungen oder die Fixierung von Muttern auf Verschraubungen. Bei diesen Anwendungen ist es von Wichtgkeit, dass die Klebverbindungen, falls gewünscht, wieder gelöst werden können.

Es besteht allerdings ein Bedürfnis nach Klebmitteln, die eine hohe Klebstärke entwickeln, thermisch und chemisch resistent sind, die rasch durchhärten und einfach zu handhaben sind. Insbesondere besteht ein Bedürfnis nach Klebmitteln, die die vorstehend beschriebenen Eigenschaften besitzen und die als Einkomponentenformulierungen auf die zu verklebenden Oberflächen aufgebracht werden können.

Es wurde nun gefunden, dass Klebmittel enthaltend eine anaerob härtende Formulierung, in der Regel auf Acrylesterbasis, und ein Epoxidharz, sowie einen Härter für besagtes Epoxidharz, den oben beschriebenen Anforderungen gerecht werden.

Als Härter für das Epoxidharz lassen sich aus der Epoxidtechnologie bekannte Härter einsetzen, die sofort nach dem Vermischen mit dem Harz eine Härtung einleiten oder es lassen sich sogenannte latente Härter verwenden, die erst nach Ueberschreiten einer gewissen Temperatur den Härtungsvorgang initiieren.

Klebmittelzusammensetzungen enthaltend sowohl Epoxidharze als auch Acrylharze sind an sich bekannt. So beschreibt beispielsweise die GB-Anmeldung 2,110,705A eine polymerisierbare Mischung enthaltend ein polymerisierbares Epoxidharz, ein polymerisierbares Acrylharz und eine bifunktionelle Komponente, die mit beiden Harztypen reagieren kann.

In der Praxis bringt man diese Formulierungen auf eine der zu verklebenden Oberflächen auf und versieht die zweite Oberfläche mit dem Starter und/oder Härtungskatalysator. Die Aushärtung der Mischung beginnt sogleich nach dem Kontaktieren beider Oberflächen, da das polymerisierbare

Acrylharzsystem, also das Acrylmonomere, der Starter und der Beschleuniger nicht stabil ist, sogar in Gegenwart von Sauerstoff. Das vorbekannte System ist also nicht als anaerob aushärtend anzusehen. Es ist nicht möglich, eine stabile Klebstofformulierung enthaltend alle in der Beschreibung dieser Patentanmeldung aufgezählten Komponenten herzustellen.

In der US-PS 4,160,178 werden Zusammensetzungen beschrieben, die sowohl eine anaerob aushärtende Mischung als auch ein Epoxidharz enthalten. Im Patent wird ein Verfahren zum Imprägnieren elektrischer Bauteile beschrieben, wobei besagte Bauteile mit dem Harzgemisch durchtränkt und anschliessend gehärtet werden.

Als Harzgemisch werden Zusammensetzungen bestehend aus aliphatischem Polyacrylharz, aliphatischem Monoacrylharz, Epoxidharz, aromatischem Vinylmonomeren und einem Anhydrid im Gewichtsverhältnis 10 : 0-20 : 0,1-100 : 0-120 : 0-60 zusammen mit einem organischen Radikalstabilisator, einem Radikalbildner, einem Beschleuniger und einem Co-Beschleuniger verwendet.

Für das Aushärten ist es von Wichtigkeit, dass die Klebstelle mit einem inerten Gas gespült wird, um gelösten Sauerstoff zu entfernen. Diese Verdrängung des Sauerstoffs wird als wesentlicher Verfahrensschritt angesehen. Ein Entfernen des gelösten Sauerstoffs durch Anlegen eines Vakuums hat nach der Patenschrift nicht denselben Effekt.

Daraus ist abzuleiten, dass dieser Klebstoff in einer Klebstelle, die von zwei undurchlässigen Materialien begrenzt wird, nicht genügend aushärtert, bzw. überhaupt nicht aushärtet, da gelöster Sauerstoff den Vorgang inhibiert.

Aus beiden Patenten ist daher keine Klebstofformulierung ableitbar, die unter Sauerstoffeinfluss lagerstabil ist und die unter anaeroben Bedingungen, beispielsweise durch Einbringen zwischen zwei undurchlässige zu verbindende Oberflächen, rasch durchhärtet, die gegebenenfalls in der Hitze weiter ausgehärtet werden kan, um eine bessere Klebstärke zu ergeben, und die in dieser Eigenschaft herkömmlichen Epoxidklebmitteln gleicht.

Die vorliegende Erfindung betrifft Zusammensetzungen enthaltend

A) eine anaerob polymerisierbare Mischung, die bei Kontakt mit Sauerstoff stabil ist, bei Ausschluss von Sauerstoff hingegen polymerisiert, wobei besagte Mischung

a) einen radikalisch polymerisierbaren Acrylester
b) einen organischen Radikalbildner, und
c) einen organischen Beschleuniger der radikalischen Polymerisation enthält, und

B) ein Epoxidharz, und

C) einen Härter für besagtes Epoxidharz ausgewählt aus der Gruppe der basischen Härter, der Polymerkaptane oder der Polyphenole.

Anaerob polymerisierbare Mischungen, die bei Kontakt mit Sauerstoff stabil sind, bei Ausschluss von Sauerstoff hingegen polymerisieren, sind bekannt und seit vielen Jahren als anaerobe Klebstoffe kommerziell erhältlich.

Solche Mischungen enthalten eine geeignete Kombination von a) polymerisierbarer Verbindung, b) Initiator und c) Beschleuniger, die so ausgewählt wird, dass man die gewünschten anaeroben Eigenschaften erhält.

Zu den polymerisierbaren Verbindungen a) zählen insbesondere Acrylester und ganz besonders Verbindungen enthaltend mindestens zwei Gruppen der Formel I

$$CH_2{=}C(R^1){-}CO{-}O{-} \qquad (I),$$

worin $R^1$ Wasserstoff, Chlor, Methyl oder Ethyl bedeutet.

Geeignete Ester mit mindestens zwei Gruppen der Formel I basieren insbesondere auf Acrylsäure oder Methacrylsäure und leiten sich von aliphatischen, cycloaliphatischen, alicycloaliphatischen, araliphatischen oder heterocyclisch-aliphatischen polyvalenten Alkoholen, bevorzugt Diolen oder Triolen; von Polyhydroxycarbonsäuren, insbesondere Dihydroxycarbonsäuren; von Polyhydroxyalkylaminen, insbesonders Dihydroxyalkylaminen; und von Polyhydroxyalkylnitrilen, insbesondere Dihydroxalkylnitrilen.

Daneben können auch Acrylsäureesterurethane oder-ureide verwendet werden. Diese Ester sind in der Regel kommerziell erhältlich oder können nach an sich bekannten Methoden erhalten werden.

Bevorzugte Acrylester die als polymerisierbare Verbindungen a) eingesetzt werden können, sind Verbindungen der Formel II

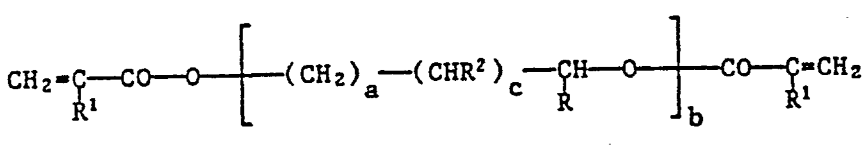

(II)

worin $R^1$ Wasserstoff, Chlor, Methyl oder Ethyl ist, R Wasserstoff, Methyl, Ethyl, Hydroxymethyl oder $-CH_2-O-CO-C(R^1){=}CH_2$ bedeutet, $R^2$ Wasserstoff, $-OH$ oder $-O-CO-C(R^1){=}CH_2$ ist, a eine ganze Zahl von 1 bis 8 ist, b eine ganze Zahl von 1 bis 20 bedeutet und c 0 oder 1 ist.

Von den Verbindungen der Formel II werden insbesondere solche bevorzugt, worin a eine ganze Zahl von 1 bis 4 ist, b eine ganze Zahl von 1 bis 5 bedeutet und $R^1$ Wasserstoff oder Methyl ist.

Spezifische Beispiele von Verbindungen aus dieser Gruppe sind Diacrylate oder Dimethacrylate von Ethylenglykol, Propylenglykol, Butan-1,4-diol, Diethylenglykol, Dipropylenglykol, Triethylenglykol, Tripropylenglykol, Tetraethylenglykol oder Tetrapropylenglykol, sowie von Polyethylen- und Polypropylenglykolen mit einem durchschnittlichen Molekulargewicht von 200-1000.

Weiterhin geeignete polymerisierbare Verbindungen a) sind Acrylester der Formel III

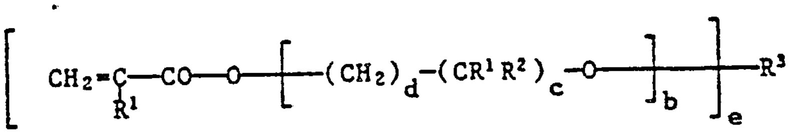

(III)

worin $R^1$ Wasserstoff, Chlor, Methyl oder Ethyl ist, $R^2$ Wasserstoff, —OH oder —O—CO—C($R^1$)=$CH_2$ ist, b eine ganze Zahl von 1 bis 20 bedeutet, c 0 oder 1 ist, d 0 ist oder eine positive ganze Zahl darstellt, mit der Massgabe, dass nicht sowohl c als auch d gleichzeitig 0 sind, worin e 2, 3 oder 4 ist, und worin $R^3$ einen organischen Rest der Wertigkeit e darstellt, der über Kohlenstoffatom(e) mit besagten b Sauerstoffatomen verbunden ist.

Bevorzugte Verbindungen der Formel III sind diejenigen, worin b, c und d jeweils 1 bedeuten, $R^1$ Wasserstoff oder Methyl ist und worin $R^3$ der Kohlenwasserstoffrest eines aliphatischen polyvalenten Alkohols mit 2 bis 6 Kohlenstoffatomen bedeutet. Bevorzugt leitet sich $R^3$ von Pentaerithrit ab.

Eine spezifische Verbindung für Verbindungen dieser Gruppe ist Pentaerithrit-tetrakis-(dimethylenglykolacrylat).

Weitere geeignete polymerisierbare Verbindungen a) sind solche der Formel IV

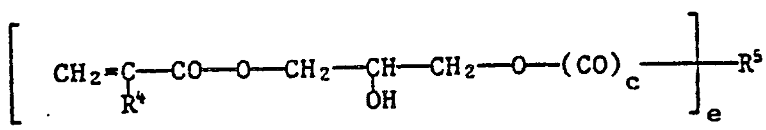

(IV)

worin c 0 oder 1 ist, e 2, 3 oder 4 bedeutet, $R^4$ Wasserstoff oder Methyl ist und $R^5$ ein e-wertiger organischer Rest ist, der über ein Kohlenstoffatom, dass kein Carbonylkohlenstoffatom ist, mit dem Restmolekül verbunden ist.

Von diesen Verbindungen werden insbesondere solche bevorzugt, worin c 0 ist und worin $R^5$ ein organischer Rest mit 1 bis 60 Kohlenstoffatomen ist, der sich von einem Alkohol oder Phenol ableitet, das e-Hydroxylgruppen besitzt.

$R^5$ kann also eine aromatische, araliphatische, alkaromatische, cycloaliphatische, heterocycloaliphatische oder heterocyclische Gruppe sein, so wie beispielsweise ein aromatischer Rest mit nur einem Benzolring, gegebenenfalls substituiert mit Chlor, Brom oder $C_1$-$C_9$ Alkyl; oder es handelt sich bei $R^5$ um aromatische Gruppen, die aus zwei bis vier über C-C Bindungen verknüpften Benzolringen bestehen, wobei besagte Verknüpfung gegebenenfalls über Ethersauerstoffatome, $C_1$-$C_4$ aliphatische Reste oder Sulfonreste erfolgen kann, oder wobei jeder Benzolkern gegebenenfalls durch Chlor, Brom oder $C_1$-$C_9$ Alkyl substituiert sein kann oder; es handelt sich bei $R^5$ um gesättigte oder ungesättigte geradkettige oder verzweigtkettige aliphatische Reste, die gegebenenfalls Etherbrücken enthalten und gegebenenfalls durch Hydroxygruppen substituiert sind; dabei handelt es sich vorzugsweise um gesättigte oder monoethylenisch ungesättigte geradkettige aliphatische $C_1$-$C_8$ Kohlenwasserstoffreste.

Spezifische Beispiele für solche bevorzugten Gruppen $R^5$ sind die aromatischen Reste $-C_6H_4-C(CH_3)_2-C_6H_4-$ (in diesem Falle ist e = 2) oder $-C_6H_4-(CH_2-C_6H_3-)_f-CH_2-C_6H_4-$, worin f 1 oder 2 ist (in diesem Falle ist e 3 oder 4, je nach Bedeutung von f). Ebenfalls bevorzugt als Gruppen $R^5$ werden die aliphatischen Reste $-CH_2-CH-CH_2-$ oder $-CH_2-CH-(CH_2)_3-CH_2-$ (in beiden Fällen ist e = 3) oder die Reste der Formeln $-(CH_2)_4-$, $-CH_3-CH=CH-CH_2$, $-CH_2-CH_2-O-CH_2-CH_2-$ oder $-(CH_2-CH_2-O-)_3-CH_2-CH_2-$ (in diesen Fällen ist e = 2).

Im Falle von c = 1 kann $R^5$ ein Rest bedeuten, der sich von einer e-wertigen Carbonsäure ableitet.

Vorzugsweise handelt es sich bei $R^5$ um eine gesättigte oder ethylenisch ungesättigte geradkettige oder verzweigtkettige aliphatische Kohlenwasserstoffgruppe mit 1 bis 20 Kohlenstoffatomen, die gegebenenfalls durch Chloratome oder durch Hydroxylgruppen substituiert sein kann oder die gegebenenfalls durch Ethersauerstoffatome und/oder Carbonyloxygruppen (—CO—O—) unterbrochen sein kann; es kann sich bei $R^5$ auch um eine ethylenisch ungesättigte geradkettige oder verzweigtkettige aliphatische $C_{50}$-$C_{100}$ Kohlenwasserstoffgruppe handeln; oder es handelt sich bei $R^5$ um eine gesättigte oder ethylenisch ungesättigte cycloaliphatische oder aliphatisch-cycloaliphatische $C_4$-$C_{60}$ Kohlenwasserstoffgruppe, die gegebenenfalls mit Chloratomen substituiert sein kann; oder es handelt sich um eine aromatische Kohlenwasserstoffgruppe mit 6 bis 12 Kohlenstoffatomen, die gegebenenfalls durch Chlor- oder Bromatome substituiert sein kann.

Ebenfalls bevorzugte Verbindungen mit der Definition c = 1 sind diejenigen, worin $R^5$ eine gesättigte oder ethylenisch ungesättigte geradkettige oder verzweigtkettige aliphatische Kohlenwasserstoffgruppe mit 1 bis 8 Kohlenstoffatomen bedeutet, die gegebenenfalls mit einer Hydroxylgruppe substituiert sein kann, oder worin $R^5$ ein gesättigter oder ethylenisch ungesättigter geradkettiger oder verzweigtkettiger aliphatischer Kohlenwasserstoffrest mit 4 bis 50 Kohlenstoffatomen ist, der durch Carbonyloxygruppen unterbrochen ist, oder worin $R^5$ ein gesättigter oder ethylenisch ungesättigter monocyclischer oder bicyclischer cycloaliphatischer Kohlenwasserstoffrest mit 6 bis 8 Kohlenstoffatomen bedeutet, oder ein ethylenisch ungesättigter cycloaliphatisch-aliphatischer Kohlenwasserstoffrest mit 10 bis 51 Kohlenstoffatomen bedeutet, oder worin $R^5$ ein einkerniger aromatischer Kohlenwasserstoffrest mit 6 bis 8 Kohlenstoffatomen ist.

Spezifische Beispiele für diese bevorzugten sich von Carbonsäuren ableitenden Reste $R^5$ sind $-CH_2-CH_2-$, $-CH=CH-$, $-(CH_2-CH=CH-CH_2)-_n$ oder $-C_6H_4-$ ; in diesen Fällen ist e = 2 und n ist eine ganze Zahl von 1-25.

Spezifische Beispiele für Verbindungen der Formel IV sind 1,4-Bis-(2-hydroxy-3-(acryloyloxy)-propoxybutan, Poly-(2-hydroxy-3-(acryloyloxy)-propyl)-ether von Bis-(4-hydroxyphenyl)-methan (Bisphenol F), von 2,2-Bis-(4-hydroxyphenyl)-propan (Bisphenol A) oder von Phenol-Formaldehyd Novolaken ; sowie Bis-(2-hydroxy-3-acryloyloxypropyl)-adipat, Bis-(2-hydroxy-3-acryloyloxypropyl)-ester carboxyterminierter Polybutadiene und die Methacryloyloxy-Analogen dieser Verbindungen.

Ebenfalls bevorzugt als polymerisierbare Verbindungen a) sind Acrylat-urethane oder -ureide der Formel V

$$\left[ CH_2=\underset{R^1}{C}-CO-O-R^6-X-CO-NH- \right]_g R^7 \qquad (V)$$

worin $R^1$ Wasserstoff, Chlor, Methyl oder Ethyl bedeutet, $R^6$ ein divalenter aliphatischer, cycloaliphatischer, aromatischer oder araliphatischer Rest ist, der über Kohlenstoffatom(e) an besagte —O— und —X-Gruppen gebunden ist,
worin X —O—, —NH— oder —N(Alkyl)- bedeutet, worin die Alkylgruppe 1 bis 8 Kohlenstoffatome besitzt, worin g eine ganze Zahl von 2 bis 6 bedeutet und worin $R^7$ ein g-wertiger cycloaliphatischer, aromatischer oder araliphatischer Rest ist, der über ein Kohlenstoffatom oder über Kohlenstoffatome mit der (den) —NH-Gruppe(n) verbunden ist.

Die Gruppe $R^6$ bedeutet vorzugsweise eine divalente aliphatische Gruppe mit 2 bis 6 Kohlenstoffatomen. Bei $R^7$ handelt es sich bevorzugt um eine der folgenden Gruppen : eine divalente aliphatische Gruppe mit 2 bis 10 Kohlenstoffatomen, wie beispielsweise $-(CH_2)_6-$, $-CH_2-C(CH_3)_2-CH_2-CH(CH_3)-(CH_2)_2-$ oder $-CH_2-CH(CH_3)-CH_2-C(CH_3)_2-(CH_2)_2-$ ; oder es handelt sich um eine Phenylengruppe, die gegebenenfalls mit einem Chloratom oder einer Methylgruppe substituiert ist ; oder es handelt sich um eine Naphthylengruppe ; oder es handelt sich um Gruppen der Formel $-C_6H_4-C_6H_4-$, $-C_6H_4-CH_2-C_6H_4-$ oder $-C_6H_4-C(CH_3)_2-C_6H_4-$ ; oder es handelt sich um eine einkernige Alkylcycloalkylen- oder Alkylcycloalkylalkylengruppe mit 6 bis 10 Kohlenstoffatomen, wie beispielsweise Methylcyclohex-2,4-ylen, Methylcyclohex-2,6-ylen oder 1,3,3-Trimethylcyclohex-5-ylenmethyl).

Spezifische Beispiele für Verbindungen der Formel V sind 2,4- und 2,6-Bis-(2-acryloyloxyethoxycarbonamido)-toluol sowie die entsprechenden Methacryloyloxyderivate.

Ebenfalls bevorzugt als polymerisierbare Verbindungen a) werden Verbindungen der Formel VI

$$R^8-C(R^9)-\left[ CH_2-O-CO-C(R^1)=CH_2 \right]_2 \qquad (VI)$$

worin $R^1$ Wasserstoff Chlor, Methyl oder Ethyl ist, $R^8$ Methyl, Ethyl, Hydroxymethyl oder $CH_2=C(R^1)-CO-O-CH_2-$ bedeutet, und worin $R^9$ Hydroxymethyl oder $CH_2=C(R^1)-CO-O-CH_2-$ ist.

Insbesondere bevorzugt als Verbindungen der Formel VI werden das 1,1,1-Trimethylolpropantriacrylat, das Pentaerithrit-tetraacrylat sowie die entsprechenden Methacrylate.

Ebenfalls geeignet als polymerisierbare Verbindungen a) sind Verbindungen der Formel VII

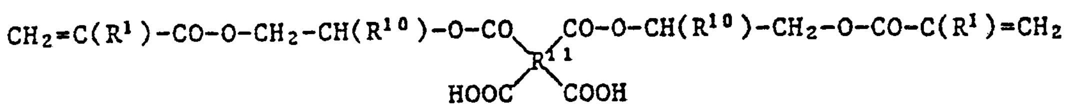

(VII)

worin $R^1$ Wasserstoff, Chlor, Methyl oder Ethyl ist, $R^{10}$ Wasserstoff, Methyl oder Chlormethyl bedeutet, $R^{11}$ ein tetravalenter Rest mit bis zu 20 Kohlenstoffatomen ist, wobei besagter Rest ein oder mehrere carbocyclische Gruppen enthält, mit der Massgabe, dass jedes der in Formel VII angegebenen Paare von

—COOH oder —CO—O—CH($R^{10}$)—$CH_2$—O—OC—C($R^1$)=$CH_2$ Gruppen direkt an benachbarte Kohlenstoffatome gebunden ist.

Bevorzugte Verbindungen der Formel VII sind solche mit $R^1$ und $R^{10}$ als Wasserstoff oder Methyl und mit $R^{11}$ als Rest einer aromatischen Tetracarbonsäure enthaltend einen oder zwei Phenylringe. Besonders bevorzugte Reste $R^{11}$ leiten sich von Pyromellithsäure oder von Benzophenon-3,3',4,4'-tetracarbonsäure ab.

Die Verbindungen der Formel VII lassen sich durch Umsetzung von Hydroxyethyl- oder Hydroxypropylestern der Acrylsäure oder der Methacrylsäure mit einem aromatischen Tetracarbonsäuredianhydrid, wie beispielsweise Pyromellithsäuredianhydrid oder Benzophenon-3,3',4,4'-tetracarbonsäureanhydrid erhalten.

Von den oben als bevorzugt erwähnten polymerisierbaren Verbindungen a) können alle als solche eingesetzt werden, oder es können Mischungen dieser Verbindungen verwendet werden, wobei diese Verbindungen gegebenenfalls mit einem geeigneten Verdünnungsmittel versetzt werden können. Bei diesen Verdünnungsmitteln handelt es sich vorzugsweise um Acryl- oder Methacrylester mit einer niedrigen Viskosität, wie beispielsweise um ein Alkyl-, Cyanalkyl- oder Hydroxyalkylacrylat oder -methacrylat.

Als organischer Radikalbildner b) und organischer Beschleuniger der radikalischen Polymerisation c), die in der anaerob härtbaren Mischung A) Verwendung finden, lassen sich diejenigen Materialien verwenden, die bereits in anaerob polymerisierbaren Zusammensetzungen eingesetzt werden.

Bei den organischen Radikalbildnern handelt es sich dabei also beispielsweise um Hydroperoxide, Peroxide, α-Hydroxysulfone, aromatische α-Aminosulfone oder um Mischungen von organischen Aminoxiden und NH= aziden Verbindungen, wie beispielsweise Sulfonsäure- oder Carbonsäurehydrazide, Sulfimide, Disulfonylimide oder Acylcyanamide.

Bevorzugte Initiatoren der Polymerisation sind Hydroperoxide, Peroxide oder Mischungen von organischen Aminoxiden und Sulfonsäurehydraziden.

Zu den organischen Hydroperoxiden, die bevorzugt Verwendung finden, zählen beispielsweise Verbindungen der Formel $R^{12}$—OOH, worin $R^{12}$ ein monovalenter organischer Rest mit bis zu 18 Kohlenstoffatomen bedeutet, insbesondere ein Alkyl-, oder Aryl- oder Aralkylrest mit 4 bis 13 Kohlenstoffatomen. Typische Hydroperoxide sind Ethylmethylketon-Hydroperoxid, tert.Butylhydroperoxid, Cumolhydroperoxid sowie Hydroperoxide, die sich bei der Oxidation von Keten oder Cyclohexen bilden. Insbesondere bevorzugt werden tert.Butylhydroperoxid und Cumolhydroperoxid.

Als organische Peroxide lassen sich beispielsweise verwenden : 2,5-Dimethyl-2,5-bis-(benzoylperoxy)-hexan, 2,5-Dimethyl-2,5-bis-(tert.butylperoxy)-hexan, Di-tert.butylperoxid, Dihexylenglykolperoxid, tert.Butylcumylperoxid, Isobutylmethylketon-Peroxid und auch Perester, wie beispielsweise tert.Butylperacetat, tert.Butylperbenzoat oder tert.Butylperphthalat.

Bevorzugte Aminoxide, die ebenfalls in Form ihrer Salze eingesetzt werden können, sind Oxide der tertiären aromatischen Amine, wie beispielsweise von N,N-Dimethyl-p-toluidin und N,N-Dimethylanilin.

Bevorzugte Hydrazide leiten sich von aromatischen Sulfonsäuren, wie beispielsweise Benzolsulfonsäure oder p-Toluolsulfonsäure, ab.

Geeignete organische Beschleuniger der radikalischen Polymerisation c) sind beispielsweise aliphatische Amine mit mindestens zwei primären Aminogruppen und die sich davon ableitenden Ketimine. Beispiele für die Verbindungen sind Diethylentriamin oder Triethylentetramin und deren Ketimine mit Isobutylmethylketon ; andere Beschleuniger leiten sich von Polyisocyanaten ab, beispielsweise von Toluol-2,4-di-isocyanat, oder sie leiten sich von Aldiminen oder von tertiären Aminen ab, wie beispielsweise von N,N-Dimethylbenzylamin, N,N-Dimethyl-p-toluidin oder Triethylamin ; die Beschleuniger können aber auch zu der Gruppe der Imide oder der Sulfimide gehören, wie beispielsweise o-Benzoesulfimid ; es kann sich auch um Dithiocarbamate, Amide oder Thioamide handeln, beispielsweise um Formamid ; oder es handelt sich um Thiazole, wie um 2-Merkaptobenzthiazol ; oder es handelt sich um Phosphorylhydrazine, wie beispielsweise um Diethylphosphonohydrazid ; oder es handelt sich um Ascorbinsäure, um organische Phosphite, quaternäre Ammoniumsalze oder um Basen ; es kann sich auch um Salze von Uebergangsmetallen handeln oder um Thioharnstoffe.

Besonders bevorzugte Beschleuniger sind Mischungen von einem Sulfimid, wie beispielsweise o-Benzoesäuresulfimid, und einem aromatischen tertiären Amin wie beispielsweise N,N-Dimethyl-p-toluidin ; oder es sind Mischungen von einem Phosphorylhydrazin, wie beispielsweise Diethylphosphorylhydrazin, und einem aromatischen tertiären Amin, wie beispielsweise N,N-Dimethyl-p-toluidin.

Die Menge an organischem Radikalbildner b) beträgt in der Regel zwischen 0,01 und 15 Gew.% bezogen auf die Menge an radikalisch polymerisierbarer Verbindung a), bevorzugt werden Mengen von 1 bis 10 Gew.%.

Die Menge an organischem Beschleuniger der Polymerisation c) beträgt in der Regel 1 bis 10 Gew.% bezogen auf die Menge an radikalisch polymerisierbarer Verbindung a).

Wünscht man eine Einkomponentenklebstofformulierung, die also nicht unmittelbar vor ihrer Verwendung durch Mischen der verschiedenen Komponenten hergestellt werden muss, so sollten diejenigen Gemische enthaltend eine radikalisch polymerisierbare Verbindung a), einen organischen Radikalbildner b) und einen organischen Beschleuniger der Polymerisation c) nicht verwendet werden, die bei Raumtemperatur mit Epoxidharzen reagieren könnten.

Bei den Epoxidharzen, die in den erfindungsgemässen Zusammensetzungen Verwendung finden, handelt es sich um Verbindungen, die im Mittel mehr als eine 1,2-Epoxidgruppe im Molekül besitzen.

Solche Harze können aliphatische, aromatische, cycloaliphatische, araliphatische oder heterocyclische Gruppen enthalten ; sie enthalten die Epoxidgruppen als Seitengruppen oder diese Gruppen bilden einen Teil eines alicyclischen oder heterocyclischen Ringsystems. Die Epoxidgruppen sind vorzugsweise als Glycidylgruppen über Ether- oder Esterbindungen mit dem Restmolekül verbunden, oder es handelt sich um N-Glycidylderivate von heretocyclischen Aminen, Amiden oder Imiden. Epoxidharze dieser Typen sind bekannt und im Handel erhältlich.

Bevorzugte Epoxidharze enthalten wenigstens zwei Reste der Formel VIII

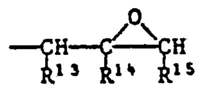

(VIII)

wobei diese Reste direkt an Sauerstoff-, Stickstoff- oder Schwefelatome gebunden sind, worin $R^{13}$ und $R^{15}$ beide Wasserstoff sind und $R^{14}$ Wasserstoff oder Methyl ist, oder worin $R^{13}$ und $R^{15}$ zusammen $-CH_2-CH_2-$ bedeuten und $R^{14}$ dann Wasserstoff ist.

Beispielhaft für Epoxidharze dieses Typs wären zu erwähnen :

I) Polyglycidyl- und Poly-(β-methylglycidyl)-ester erhältlich durch Umsetzung einer Verbindung mit mindestens zwei Carboxylgruppen im Molekül und Epichlorhydrin bzw. Glyzerindichlorhydrin bzw. β-Methyl-epichlorhydrin. Die Umsetzung erfolgt zweckmässig in der Gegenwart von Basen.

Als Verbindung mit mindestens zwei Carboxylgruppen im Molekül können aliphatische Polycarbonsäuren verwendet werden. Beispiele für diese Polycarbonsäuren sind Oxalsäure, Bernsteinsäure, Glutarsäure, Adipinsäure, Pimelinsäure, Korksäure, Azelainsäure, Sebazinsäure oder dimerisierte bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.

Weiterhin können aromatische Polycarbonsäuren Verwendung finden, wie beispielsweise Phthalsäure, Isophthalsäure oder Terephthalsäure.

II) Polyglycidyl- oder Poly-(β-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschliessender Alkalibehandlung.

Ether dieses Typs leiten sich beispielsweise ab von acyclischen Alkoholen, wie Ethylenglykol, Diethylenglykol und höheren Poly-(oxyethylen)-glykolen, Propan-1,2-diol oder Poly-(oxy-propylen)-glykolen, Propan-1,3-diol, Butan-1,4-diol, Poly-(oxy-tetramethylen)-glykolen, Pentan-1,5-diol, Hexane-1,6-diol, Hexan-2,4,6-triol, Glycerin, 1,1,1-Trimethylolpropan, Pentaerythrit, Sorbit, sowie von Polyepichlorhydrinen.

Sie leiten sich aber auch beispielsweise ab von cycloaliphatischen Alkoholen wie 1,3- oder 1,4-Dihydroxycyclohexan, Bis-(4-hydroxy-cyclohexyl)-methan, 2,2-Bis(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethyl-amino)-diphenylmethan.

Die Epoxidverbindungen können sich auch von einkernigen Phenolen ableiten, wie beispielsweise von Resorcin oder Hydrochinon ; oder sie basieren auf mehrkernigen Phenolen wie beispielsweise auf Bis-(4-hydroxyphenyl)-methan, 4,4'-Dihydroxydiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie auf Novolaken erhältlich durch Kondensation von Aldehyden, wie beispielsweise Formaldehyd, Acetaldehyd, Chloral oder Furfuraldehyd mit Phenolen wie Phenol, oder mit Phenolen, die im Kern mit Chloratomen oder $C_1$-$C_9$Alkylgruppen substituiert sind, wie beispielsweise 4-Chlorphenol, 2-Methylphenol oder 4-tert.Butylphenol oder erhältlich durch Kondensation mit Bisphenolen, so wie oben beschrieben.

III) Poly-(N-glycidyl) Verbindungen sind beispielsweise erhältlich durch Dehydrochlorierung der Reaktionsprodukte von Epichlorhydrin mit Aminen, die mindestens zwei Aminowasserstoffatome enthalten. Bei diesen Aminen handelt es sich zum Beispiel um Anilin, n-Butylamin, Bis-(4-aminophenyl)-methan, m-Xylylendiamin oder Bis-(4-methyl-aminophenyl)-methan.

Zu den Poly-(N-glycidyl) Verbindungen zählen aber auch Triglycidyl-isocyanurat, N,N'-Diglycidylderivate von Cycloalkylenharnstoffen, wie Ethylenharnstoff oder 1,3-Propylenharnstoff, und N,N'-Diglycidylderivate von Hydantoinen, wie von 5,5-Dimethylhydantoin.

IV) Beispiele für Poly-(S-glycidyl) Verbindungen sind Di-S-glycidylderivate, die sich von Dithiolen, wie beispielsweise Ethan-1,2-dithiol oder Bis-(4-merkaptomethylphenyl)-ether ableiten.

V) Beispiele für Epoxidharze mit Resten der Formel VIII, worin $R^{13}$ und $R^{15}$ zusammen $-CH_2-CH_2-$ bedeuten sind Bis-(2,3-epoxicyclopentyl)-ether, 2,3-Epoxicyclopentylglycidylether oder 1,2-Bis-(2,3-epoxycyclopentyloxy)-ethan.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidyl-ether-glycidylester der Salicylsäure, N-Glycidyl-N'-(2-glydidyloxypropyl)-5,5-dimethylhydantoin oder 2-Glycidyloxy-1,3-bis-(5,5-dimethyl-1-glycidylhydantoin-3-yl)-propan.

Falls gewünscht, kann eine Mischung von Epoxidharzen in den erfindungsgemässen Zusammensetzungen verwendet werden.

Besonders bevorzugt als Epoxidharze werden Polyglycidylether von Bisphenolen, wie beispielsweise von 2,2-Bis-(4-hydroxyphenyl)-propan oder Bis-(4-hydroxyphenyl)-methan, von Novolaken, die durch Umsetzung von Formaldehyd mit einem Phenol gebildet werden, oder von den oben erwähnten aliphatischen Diolen, insbesondere von Butan-1,4-diol. Ebenfalls bevorzugt als Epoxidharze werden die Diglycidylester der oben erwähnten Dicarbonsäuren und die N,N'-Diglycidylderivate von Hydantoinen, wie oben erwähnt.

Als basische Härter C) der erfindungsgemässen Zusammensetzungen lassen sich die dem Fachmann bekannten Härter einsetzen. Dabei handelt es sich um Härter, die bereits bei Raumtemperatur wirksam sind oder, besonders bevorzugt, die erst beim Erhitzen aktiviert werden.

Geeignete Härter für die Härtung bei Raumtemperatur sind beispielsweise aliphatische, cycloaliphatische oder heterocyclische primäre, sekundäre oder Amine, beispielsweise aliphatische Polyamine einschliesslich der Alkylendiamine, wie Ethylendiamin, Propan-1,2-diamin, Propan-1,3-diamin, Hexamethylendiamin oder N,N-Dimethylpropylen-1,3-diamin; oder es handelt sich um Polyalkylen-polyamine wie beispielsweise um Diethylentriamin, Triethylentetramin oder Tetraethylenpentamin. Es kann sich aber auch um Alkanolamine handeln, wie beispielsweise um Ethanolamin, Diethanolamin, Triethanolamin oder N-(2-Hydroxyethyl)-diethylentriamin.

Ferner können cycloaliphatische Polyamine eingesetzt werden, wie beispielsweise Bis-(aminocyclohexyl)-methan, Bis-(4-amino-3-methyl-cyclohexyl)-methan oder Isophorondiamin.

Bei den erfindungsgemäss verwendbaren heterocyclischen Polyaminen handelt es sich Beispielsweise um N-Alkylpiperazine, wie N-(2-Amino-ethyl)-piperazin. Man kann aber auch Polyaminoamide, wie beispielsweise die Reaktionsprodukte von aliphatischen Polyaminen mit dimerisierten oder trimerisierten ungesättigten Fettsäuren verwenden. Obgleich die obenerwähnten Härter bereits bei Raumtemperatur wirken, kann die Härtung beschleunigt auch bei erhöhten Temperaturen durchgeführt werden.

Geeignete wärmeaktivierbare oder latente basische Härter findet man beispielsweise in der Gruppe der primären oder sekundären aromatischen Amine, beispielsweise der Phenylendiamine, der substituierten Phenylendiamine, wie beispielsweise 2,4- oder 2,6-Diethyl-3,5-diaminotoluol, Bis-(aminophenyl)-methan (z. B. das 4,4'-Derivat) oder Bis-(aminophenyl)-sulfon (z. B. das 4,4'-Derivat), sowie Bis-(aminophenyl)-keton (z. B. das 4,4'-Derivat). Zu dieser Gruppe von Härtern zählen auch die Imidazole bzw. die substituierten Imidazole, wie beispielsweise das 2-Methylimidazol, 2-Phenylimidazol, 1-Benzyl-2-methylimidazol oder das 1-Cyanethyl-2-methylimidazol; oder die Amide einschliesslich der substituierten Harnstoffe, insbesondere der Harnstoffe mit aromatischen Resten, wie beispielsweise N-(4-Chlorphenyl)-N,N'-dimethylharnstoff, N-(2-Hydroxyphenyl)-N',N'-dimethylharnstoff, N-(3-Chlor-4-methylphenyl)-N',N'-dimethylharnstoff oder 2,4-Bis-(N,N-dimethyl-ureido)-toluol. Man kann auch Amidine, wie Dicyandiamid oder 1-Cyan-3-(niedrigalkyl)-guanidine, wie z. B. die 3-Methyl-, 3,3-Dimethyl- oder 3,3-Diethylderivate, als latente Härter einsetzen.

Ausserdem eignen sich Komplexe von Bortrichlorid mit einem tertiären aliphatischen, cycloaliphatischen oder heterocyclischen Amin als latente Härter, insbesondere Komplexe mit Trimethylamin oder Octyldimethylamin.

Als Polymerkaptane, die sich vorteilhafterweise als Komponente C) der erfindungsgemässen Zusammensetzungen einsetzen lassen, sind beispielsweise Verbindungen aus der Gruppe der merkaptanterminierten Polyoxyalkylenether oder -ester zu nennen.

Die Ether sind in der Regel erhältlich durch Umsetzung von Polyoxyalkenglykolen oder Triolen mit Epichlorhydrin und in einer weiteren Umsetzungstufe mit Natriumhydrogensulfid; oder man setzt besagte Polyoxyalkylenglykole oder Triole zuerst mit Alkylenoxid um und nachfolgend mit Natriumhydrogensulfid.

Die Ester sind in der Regel Ester von Polyoxyalkenylglykol oder einem Triol mit einer Merkaptocarbonsäure, beispielsweise Thioglycolsäure oder 2- oder 3-Merkaptopropionsäure.

Weitere geeignete Polymerkaptane sind Ester dieser Merkaptocarbonsäuren mit polyvalenten Alkoholen enthaltend 2 bis 6 Kohlenstoffatome, beispielsweise mit Ethylen- oder Propylenglykolen, Glycerin, 1,1,1-Trimethylolpropan oder Pentaerithrit.

Als polyvalente Phenole, die sich vorteilhafterweise als Komponente C) in den erfindungsgemässen Zusammensetzungen einsetzen lassen, sind einkernige Phenole, wie beispielsweise Resorcin, mehrkernige Phenole, bevorzugt Bisphenole, wie beispielsweise Bisphenol A oder Bisphenol F, zu erwähnen, sowie Novolake, die sich durch Kondensation eines einkernigen Phenols oder eines mehrkernigen Phenols, insbesondere von Phenol oder Bisphenol A, mit Formaldehyd erhalten lassen.

Härtungsbeschleuniger, die üblicherweise mit den oben erwähnten Härtern zusammen eingesetzt werden können, lassen sich auch in den erfindungsgemässen Zusammensetzungen verwenden.

So lässt sich beispielsweise für den Härter Dicyandiamid ein substituierter Harnstoff, wie beispielsweise N-(4-Chlorphenyl)-N',N'-dimethylharnstoff oder N-(3-Chlor-4-methylphenyl)-N',N'-dimethylharnstoff, als Härtungsbeschleuniger verwenden ; oder man setzt für einen Polymerkaptanhärter beispielsweise eine Mannichbase, wie 2,4,6-Tris-(dimethylaminoethyl)-phenol, als Härtungsbeschleuniger ein.

Die erfindungsgemässen Zusammensetzungen können über die oben definierten Bestandteile hinaus auch noch weitere Zusätze enthalten. Diese Zusätze sind an sich bekannt. Dazu zählen beispielsweise Inhibitoren der radikalischen Polymerisation, vorzugsweise p-Benzochinon, Stabilisatoren, Verdickungsmittel oder Füllstoffe.

Das Gewichtsverhältnis von radikalisch polymerisierbarer Verbindung a) zu Epoxidharz B) bewegt sich in der Regel im Bereich von 1 : 0.05 bis 1 : 10, bevorzugt im Bereich von 1 : 0,2 bis 1 : 2.

Der Gewichtsanteil des Härters für besagtes Epoxidharz entspricht dem in der Technologie der Epoxidharze üblicherweise angewendeten Mengen. Der Anteil kann in Abhängigkeit vom speziellen Epoxidharz oder Härter abgewandelt werden. Typische Gewichtsanteile des Härters bewegen sich im Bereich von 0,01 bis 0,5 Gewichtsteilen bezogen auf 1,0 Gewichtsteile Epoxidharz.

Bringt man die erfindungsgemässe Zusammensetzung auf eine undurchlässige Oberfläche auf und kontaktiert diese mit einer zu verbindenden Oberfläche, so erfolgt die anaerobe Polymerisation der Mischung innerhalb kurzer Zeit, üblicherweise innerhalb von 10 Minuten.

Die beiden Oberflächen werden dann durch die polymerisierte Mischung zusammengehalten, während die endgültige Aushärtung der Mischung weiter fortschreitet. Die Härtung erfolgt bei Raumtemperatur oder auch bei erhöhten Temperaturen.

Die Erfindung betrifft daher auch ein Verfahren zum Verkleben zweier undurchlässiger Oberflächen durch Aufbringen einer härtbaren Zusammensetzung auf wenigstens eine der Oberflächen und Kontaktierung beider Oberflächen, sowie vorzugsweise Fixierung dieser Anordnung, dadurch gekennzeichnet, dass man als härtbare Zusammensetzung eine Mischung wie oben definiert verwendet und dass man durch die Kontaktierung der Anordnung den Zutritt von Sauerstoff ausschliesst, bis die Zusammensetzung erhärtet.

Die weitere Verarbeitung der verklebten Oberflächen richtet sich nach der konkreten Zusammensetzung der erfindungsgemässen Mischung; üblicherweise erhitzt man die Klebstelle anschliessend auf Temperaturen zwischen 50 bis 180 °C, vorzugsweise 50 bis 150 °C, um eine rasche und vollständige Aushärtung zu gewährleisten.

Verwendet man niedrigviskose Zusammensetzungen als Klebmittel, so ist es manchmal von Vorteil, zwischen die zu verklebenden Oberflächen ein Material aufzubringen, das das Klebmittel absorbiert.

Dadurch wird verhindert, dass die Klebmasse vor der Aushärtung von der eigentlichen Klebstelle entfernt wird. Geeignete Materialien sollten nicht so dick sein, dass die anaerobe Härtung beeinflusst wird und somit die endgültig erreichbare Klebstärke vermindert wird. In der Regel eignen sich gewebte oder nicht gewebte Stoffe für diese Aufgabe ; man kann aber auch saugfähiges Papier verwenden. Vorzugsweise setzt man dünn gewobene Nylongaze ein.

In den folgenden Beispielen bedeuten Teile Gewichtsteile.

Die Harze, die in den anschliessenden Beispielen verwendet werden, haben folgende Zusammensetzung :

Epoxidharz I : Harz auf Basis von Bisphenol A, hergestellt durch Umsetzung von Epichlorhydrin mit Bisphenol A. Das Harz besitzt eine Viskosität von 7,6 Pa*sec bei 21 °C und hat einen Epoxidgehalt von 1,4 bis 1,7 Aequivalenten/kg.

Epoxidharz II : Hierbei handelt es sich um einen glycidylierten Novolak von Bisphenol A mit einem Erweichungspunkt von 72 °C. Das Harz besitzt einen Epoxidgehalt von 4,7 Aequivalenten/kg.

Epoxidharz III : Hierbei handelt es sich um den Diglycidylether von 1,4-Butandiol mit einem Epoxidgehalt von 8,3 Aequivalenten/kg.

Epoxidharz IV : Hierbei handelt es sich um einen Bisphenol A Diglycidylether mit einem Epoxidgehalt von 5,2 Aequivalenten/kg.

Acrylester I : Hierbei handelt es sich um 1,4-Bis-[2-hydroxy-3-(methacryloyloxy)-propoxy]-butan.

Acrylester II : Hierbei handelt es sich um den Di-2-hydroxy-3-(acryloyloxy)-propyl-ether von Bisphenol A. Die Verbindung wird erhalten durch Umsetzung von 1 Mol des Epoxids I mit 2 Molen Acrylsäure.

Acrylester III : Hierbei handelt es sich um Trimethylolpropan-tris-methacrylat.

Acrylester IV : Hierbei handelt es sich um das Dimethacrylat eines Polyethylenglykols mit einem durchschnittlichen Molekulargewicht von etwa 200.

Acrylester V : Hierbei handelt es sich um den Bis-(2-hydroxy-3-acryloyloxypropyl)-ester eines flüssigen carboxy-terminierten Polybutadienkautschuks vom durchschnittlichen Molekulargewicht 1 300. Die Verbindung ist unter dem Namen Hycar®VTBN 1 300 × 22 im Handel erhältlich (Hycar® ist ein eingetragenes Warenzeichen der Fa. Goodrich Chemical Company, 6 100 Oak tree Boulevard, Cleveland, Ohio, U.S.A.).

## Beispiel 1

2,5 Teile von Epoxid I, 7,5 Teile von Epoxid II und 10 Teile von Acrylester I werden bei 60 °C gemischt. Nach dem Abkühlen werden 4 Teile von Acrylester III, 0,6 Teile Cumolhydroperoxid, 0,1 Teile o-Benzoesulfimid, 0,04 Teile N,N-Dimethyl-p-toluidin, 1 Teil Dicyandiamid und 0,5 Teile N-(4-Chlorphenyl)-N'-N'-dimethylharnstoff zugegeben. Die Mischung wird auf einer Dreirollenwalze vermahlen und man erhält eine homogene Zusammensetzung.

Diese Mischung ist mehrere Monate lang stabil, wenn sie in kleinen Mengen in halbgefüllten Polyethylen-Behältern aufbewahrt wird.

Die Formulierung wird auf vorgereinigte Stahlbleche aufgebracht. Anschliessend wird ein zweites vorgereinigtes Stahlblech so über das erste Blech gelegt, dass beide Bleche überlappen und eine Klebstelle von 2,5 × 2,5 $cm^2$ an der Ueberlappungszone entsteht. Die Anordnungen werden festgeklammert und nach fünf Minuten können einige davon nicht mehr von Hand gelöst werden. Nach 10 minütiger Lagerung bei Raumtemperatur kann keine der so hergestellten Klebverbindungen mehr von Hand getrennt werden. Nach einer Stunde beträgt die mittlere Scherfestigkeit der Verbindungen 0,2 $MN/m^2$ (Mittelwert erhalten durch Messungen an sechs Proben).

Anschliessend werden die Verklammerungen gelöst und die Proben bei 120 °C nachgehärtet.

Nach einer Stunde beträgt die Scherfestigkeit dann 7,2 $MN/m^2$, und nach einer weiteren Stunde 13,7 $MN/m^2$. Sämtliche Werte sind Mittelwerte aus sechs Messungen.

## Beispiel 2

2,5 Teile Epoxid I, 7,5 Teile Epoxid II, 10 Teile Acrylester I und 4 Teile Acrylester III werden bei 60 °C gemischt. Nach dem Abkühlen werden 0,6 Teile Cumolhydroperoxid, 0,1 Teile o-Benzoesulfimid, 0,04 Teile N,N-Dimethyl-p-toluidin und 2,5 Teile einer Mischung aus 2,4- und 2,6-Diethyl-3,5-diaminotoluol zugegeben.

Diese Formulierung wird dazu benutzt, Klebverbindungen zwischen Stahlblechen herzustellen, wie in Beispiel 1 beschrieben.

Zwischen die Stahlbleche wird eine dünn gewobene Nylongaze gelegt, um zu verhindern, dass ungehärtetes Klebmittel vor der Härtung aus der geklammerten Klebstelle gedrückt wird. Die Klebverbindung kann nach 15 Minuten Lagerung bei 23 °C von Hand nicht mehr verschoben werden. Thermische Härtung bei 120 °C führt nach einer Stunde zu einer Scherfestigkeit von 11,1 $MN/m^2$. Nach einer weiteren Stunde Erhitzen auf 150 °C ist dieser Wert auf 19,7 $MN/m^2$ angewachsen. Diese Messwerte werden an 6 Proben gewonnen und stellen Mittelwerte dar.

## Beispiel 3

2,5 Teile Epoxidharz I und 7,5 Teile Epoxidharz II werden bei 60 °C mit 10 Teilen Acrylester I und mit 4,0 Teilen Acrylester III vermischt. Nach dem Abkühlen werden dieser Mischung 0,6 Teile Cumolhydroperoxid zugesetzt, sowie 0,04 Teile N,N-Dimethyl-p-toluidin, 0,1 Teile o-Benzoesulfimid und 2,7 Teile Bis-(4-aminophenyl)-methan.

Mit dieser Formulierung werden Klebverbindungen hergestellt, wie in Beispiel 1 beschrieben.

Die Klebstellen haben eine Scherfestigkeit von 0,2 $MN/m^2$, nachdem sie 30 Minuten bei 23 °C ausgehärtet wurden. Nach einer weiteren Stunde bei 120 °C steigt dieser Wert auf 10,2 $MN/m^2$ an und nach einer zusätzlichen Stunde bei 150 °C beträgt er 17,9 $MN/m^2$. Diese Messergebnisse sind Mittelwerte aus jeweils 6 Messungen.

## Beispiel 4

8,0 Teile Epoxidharz III, 4,8 Teile Acrylester II und 0,4 Teile Acrylester III werden bei 60 °C zusammengemischt und abkühlen gelassen.

Dieser Zusammensetzung gibt man 0,6 Teile Cumolhydroperoxid bei, sowie 0,1 Teile o-Benzoesulfimid, 0,05 Teile N,N-Dimethyl-p-toluidin, 1,6 Teile Dicyandiamid und 0,8 Teile N-(4-Chlorphenyl)-N'-N'-dimethylharnstoff.

Anschliessend lässt man die Mischung durch eine Dreiwalzenmühle passieren und man erhält eine homogene Paste, die bei der Lagerung bei Raumtemperatur mehrere Monate verwendungsfähig bleibt, d. h. bei der Lagerung nicht durchhärtet. Das Klebmittel wird dazu in kleinen Mengen in halbgefüllten Polyethylenbehältern gelagert.

Klebverbindungen werden wie in Beispiel 1 beschrieben hergestellt. Dabei wird eine dünne Nylongaze zwischen die zu verklebenden Oberflächen gelegt, um den übermässigen Verlust von Klebstoff vor der Aushärtung zu vermeiden.

Nach 10 Minuten Härtungsdauer ist es nicht mehr möglich, die Klebstellen mit der Hand zu lösen (Härtung bei 23 °C). Nach einer weiteren Stunde thermischer Härtung bei 120 °C ermittelt man eine Scherfestigkeit von 21,6 $MN/m^2$. Dieser Wert ist das Mittel aus 6 Einzelmessungen.

Beispiel 5

Die folgenden Mischungen werden hergestellt :

Mischung A

| | |
|---|---|
| Acrylester I | 96,7 Teile |
| Cumolhydroperoxid | 3,0 Teile |
| o-Benzoesulfimid | 0,2 Teile |
| N,N-Dimethyl-p-toluidin | 0,1 Teile |

Bei dieser Mischung handelt es sich um eine gängige anaerobaushärtende Klebstoffzusammensetzung.

Mischung B

| | |
|---|---|
| Diglycidylether auf Basis von Bisphenol A mit einem Epoxidgehalt von 5,2 Aequivalenten/kg | 89,4 Teile |
| Diglycidylether auf Basis von 1,4-Butandiol mit einem Epoxidgehalt von 8,55 Aequivalenten/kg | 6,5 Teile |
| Merkaptanterminiertes Polyoxypropylenglykol ($\overline{M}_n$ ca. 800) | 45 Teile |
| 2,4,6-Tris-(dimethylaminomethyl)-phenol | 6,3 Teile |

Dieser Mischung wird Quarzmehl beigefügt, bis die Zusammensetzung eine Viskosität von 25 Pa*sec besitzt.
Bei dieser Mischung handelt es sich um eine rasch gelierende Epoxidklebstoffzusammensetzung.

Mischung C

| | |
|---|---|
| Mischung A | 1 Teil |
| Mischung B | 2 Teile |

Mischung C wird auf das Gewinde einer Stahlschraube von 9,5 mm Durchmesser aufgebracht und die Schraubenmutter auf das Gewinde aufgeschraubt.
Es wird die Zeit ermittelt, nach der die Muttern nicht mehr von Hand entfernt werden können (Gelierungszeit). Anschliessend werden die verklebten Teile bei 120 °C 2 Stunden lang aushärten gelassen. Dann ermittelt man das Drehmoment, das nötig ist, um die Muttern aus der Klebverbindung zu lösen. Das Ergebnis findet man in der folgenden Tabelle (Mittel aus 6 Messungen).

Tabelle

| Mischung | Gelierungszeit (min) | Drehmoment nach Aushärten der Mischung (Nm) |
|---|---|---|
| C | 20 | 49,8 |

Beispiel 6

Die folgenden Substanzen werden bei Raumtemperatur zusammengegeben :

| | |
|---|---|
| Acrylester V | 10,0 g |
| Cyanethylacrylat | 10,0 g |
| Epoxidharz IV | 20,0 g |
| Glycidylmethacrylat | 2,0 g |

20,0 g dieser Mischung werden mit 0,4 g Dicyandiamid und mit 0,4 g N-(3-Chlor-4-methylphenyl)-N',N'-dimethylharnstoff vermischt und in einer Dreirollenwalze solange vermahlen, bis die Mischung homogen erscheint. Anschliessend wird das Produkt mit 0,5 g tert.-Butylcumylperoxid, 0,1 g N,N-Dimethyl-p-toluidin, 0,1 g o-Benzoesulfimid und 0,2 g Diethylphosphonohydrazid vermischt, bis eine homogene Zusammensetzung entstanden ist. Diese Formulierung wird dazu benutzt, Klebverbindungen zwischen Stahlblechen herzustellen, wie in Beispiel 1 beschrieben. Zwischen die Stahlbleche wird eine

dünne Nylongaze gelegt, um zu verhindern, dass ungehärtetes Klebmittel aus der verklammerten Klebstelle gedrückt wird, bevor die Härtung einsetzt.

Nach 2 Stunden bei 20 °C beträgt die Scherfestigkeit der Verbindungen 6,2 MN/m². Nach einer weiteren Stunde bei 120 °C steigt die Scherfestigkeit auf 22,7 MN/m² an. Diese Werte werden durch Mittelung an 6 Proben gewonnen.

Beispiel 7

Beispiel 6 wird wiederholt. Anstelle des tert.Butylcumylperoxids verwendet man jetzt allerdings eine gewichtsgleiche Menge von Cumolhydroperoxid.

Die Scherfestigkeit der Klebverbindung beträgt nach 10 Minuten bei 20 °C 5,6 MN/m² (Mittelwert aus 6 Messungen). Nach einer weiteren Stunde bei 120 °C steigt dieser Wert auf 20,7 MN/m².

Beispiel 8

Man bereitet eine Mischung aus folgenden Bestandteilen :

| | |
|---|---|
| Acrylester IV | 9,2 Teile |
| Cumolhydroperoxid | 0,5 Teile |
| N,N-Dimethyl-p-toluidin | 0,1 Teile |
| Diethylphosphonohydrazid | 0,2 Teile |
| p-Benzochinon | 0,002 Teile |
| Epoxidharz IV | 9,3 Teile |
| Dicyandiamid | 0,4 Teile |
| N-(4-Chlorphenyl)-N',N'-dimethylharnstoff | 0,4 Teile |

Mit dieser Formulierung werden Al-Bleche beschichtet, die vorher mit Aceton gereinigt wurden. Es werden auf diese Weise Klebverbindungen von 2,5 × 2,5 cm² hergestellt. Diese Verbindungen werden zusammengeklammert und 15 Minuten bei 20 °C belassen. Die Scherfestigkeit beträgt danach 0,31 MN/m² und nach 1 Stunde Erhitzen bei 120 °C steigt diese Scherfestigkeit auf 5,8 MN/m² an. Diese Werte sind Mittel aus 6 Einzelmessungen.

Das Experiment wird wiederholt, indem man Stahlbleche anstelle von Al-Blechen verwendet. Nach 10 Minuten Härtung bei 20 °C beträgt die Scherfestigkeit 0,54 MN/m² und nach 1 Stunde Erhitzen auf 120 °C steigt dieser Wert auf 6,56 MN/m².

Beispiel 9

Beispiel 7 wird wiederholt. Die Härtung wird allerdings jetzt 2 Stunden lang bei 150 °C durchgeführt. Die mittlere Scherfestigkeit der Klebverbindungen beträgt danach 28,5 MN/m².

Die Klebverbindungen werden anschliessend 1 Stunde lang unter einem Druck von 105 kN/m² einer Kochwasserbehandlung ausgesetzt. Die mittlere Scherfestigkeit der Klebverbindungen beträgt danach noch 16,3 MN/m². Diese Werte sind ebenfalls durch Mittelung an 6 Proben gewonnen.

Beispiel 10

Man bereitet eine Mischung aus 12,5 Teilen eines glycidylierten Phenol-Formaldehyd-Novolaks (Erweichungspunkt : 30 bis 45 °C ; Epoxidgehalt : 5,6 Aequivalente/kg), aus 8,2 Teilen eines Phenol-Formaldehyd-Novolaks als Härter (Phenol : Formaldehyd = 1 : 0,72 ; $\overline{M}_n$ = 420), aus 8,2 Teilen Tripropylenglykoldiacrylat, 12,5 Teilen 2-Carboxyethylacrylat, 0,3 Teilen Cumolhydroperoxid, 0,05 Teilen o-Benzoesulfimid, 0,01 Teilen N,N-Dimethyl-p-toluidin und 0,05 Teilen Diethylphosphonohydrazid.

Diese Zusammensetzung wird verwendet, um vorgereinigte Al-Bleche zu beschichten. Die präparierten Bleche werden zusammengeklammert, wobei eine dünne Nylongaze zwischen die Verbindungsstelle gelegt wird. Die Anordnung wird 2 Stunden bei Raumtemperatur gelagert und es entsteht eine Klebverbindung. Nach einer Stunde Nachhärtung bei 170 °C und anschliessendem Abkühlen auf Raumtemperatur besitzt diese Verbindung eine Scherfestigkeit von 4,3 MN/m² (Mittelwert aus 6 Messungen).

**Patentansprüche**

1. Zusammensetzungen enthaltend

A) eine anaerob polymerisierbare Mischung, die bei Kontakt mit Sauerstoff stabil ist, bei Ausschluss von Sauerstoff hingegen polymerisiert, wobei besagte Mischung

a) einen radikalisch polymerisierbaren Acrylester

b) einen organischen Radikalbildner, und

c) einen organischen Beschleuniger der radikalischen Polymeraisation enthält, und

B) ein Epoxidharz, und

C) einen Härter für besagtes Epoxidharz ausgewählt aus der Gruppe der basischen Härter, der Polymerkaptane oder der Polyphenole.

2. Zusammensetzung gemäss Anspruch 1, worin die polymerisierbare Verbindung a) mindestens zwei Gruppen der Formel I enthält

$$CH_2{=}C(R^1){-}CO{-}O{-} \qquad (I),$$

worin $R^1$ Wasserstoff, Chlor, Methyl oder Ethyl bedeutet.

3. Zusammensetzung gemäss Anspruch 2, worin die polymerisierbare Verbindung a) ein Acrylat oder Methacrylat eines aliphatischen, cycloaliphatischen, alicycloaliphatischen, araliphatischen oder heterocyclisch-aliphatischen polyvalenten Alkohols, einer Polyhydroxycarbonsäure, eines Polyhydroxyalkylamins oder eines Polyhydroxyalkylnitrils ist oder ein Acrylesterurethan oder -ureid ist.

4. Zusammensetzung gemäss Anspruch 1, worin die polymerisierbare Verbindung a) ein Acrylester der Formel II, der Formel IV oder der Formel VI ist

$$CH_2{=}C(R^1){-}CO{-}O{-}\left[(CH_2)_a{-}(CHR^2)_c{-}CH(R){-}O\right]_b{-}CO{-}C(R^1){=}CH_2 \qquad (II)$$

$$\left[CH_2{=}C(R^4){-}CO{-}O{-}CH_2{-}CH(OH){-}CH_2{-}O{-}(CO)_c\right]_e{-}R^5 \qquad (IV)$$

$$R^8{-}C(R^9){-}\left[CH_2{-}O{-}CO{-}C(R^1){=}CH_2\right]_2 \qquad (VI)$$

worin R Wasserstoff, Methyl, Ethyl, Hydroxymethyl oder $-CH_2-O-CO-C(R^1)=CH_2$ bedeutet, worin $R^1$ Wasserstoff, Chlor, Methyl oder Ethyl ist, $R^2$ Wasserstoff, $-OH$ oder $-O-CO-C(R^1)=CH_2$ ist, worin $R^4$ Wasserstoff oder Methyl bedeutet, $R^5$ ein e-wertiger organischer Rest ist, der über ein Kohlenstoffatom, das kein Carbonylkohlenstoffatom ist, mit dem Restmolekül verbunden ist, worin $R^8$ Methyl, Ethyl, Hydroxymethyl oder $CH_2=C(R^1)-CO-O-CH_2-$ bedeutet, $R^9$ Hydroxymethyl oder $-CH_2-O-CO-C(R^1)=CH_2$ darstellt, worin a eine ganze Zahl von 1 bis 8 ist, b eine ganze Zahl von 1 bis 20 bedeutet und c 0 oder 1 ist und worin e 2, 3 oder 4 darstellt.

5. Zusammensetzung gemäss Anspruch 1, worin der organische Radikalbildner b) ein Hydroperoxid, ein Peroxid, ein α-Hydroxysulfon, ein aromatisches α-Aminosulfon oder eine Mischung eines organischen Aminoxids und einer HN = -aziden Verbindung ist.

6. Zusammensetzung gemäss Anspruch 1, worin der organische Beschleuniger der radikalischen Polymerisation c) ausgewählt wird aus der Gruppe der aliphatischen Amine mit wenigstens zwei primären Aminogruppen, oder eines Ketimins eines solchen Amins, eines Polyisocyanates, eines Aldimins, eines tertiären Amins, eines Imids, eines Sulfimids, eines Dithiocarbamates, eines Amids, eines Thioamids, eines Thiazols, eines Phosphorylhydrazins, von Ascorbinsäure, eines organischen Phosphites, eines quaternären Ammoniumsalzes, einer Base, des Salzes eines Uebergangsmetalls oder eines Thioharnstoffes.

7. Zusammensetzung gemäss Anspruch 1, worin der Anteil an organischem Radikalbildner b) zwischen 0,01 und 15 Gew.%, bezogen auf die radikalisch polymerisierbare Verbindung a), beträgt, und worin der Anteil an organischem Beschleuniger der radikalischen Polymerisation c) zwischen 1 und 10 Gew.%, bezogen auf die radikalisch polymerisierbare Verbindung a), beträgt.

8. Zusammensetzung gemäss Anspruch 1, worin das Epoxidharz B) wenigstens zwei Gruppen der Formel VIII

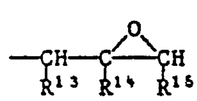

(VIII)

direkt an ein Sauerstoff-, Stickstoff- oder Schwefelatom gebunden enthält, worin $R^{13}$ und $R^{15}$ beide Wasserstoff sind und $R^{14}$ Wasserstoff oder Methyl ist oder worin $R^{13}$ und $R^{15}$ zusammen $-CH_2-CH_2-$ bedeuten und $R^{14}$ dann Wasserstoff ist.

9. Zusammensetzung gemäss Anspruch 8, worin das Epoxidharz ein Polyglycidylether eines Bisphenols, eines Novolaks aus Formaldehyd und einem Phenol oder eines aliphatischen Diols ist, oder worin das Epoxidharz ein Diglycidylester einer Dicarbonsäure ist oder ein N,N'-Diglycidylderivat eines Hydantoins bedeutet.

10. Zusammensetzung gemäss Anspruch 1, worin der Härter C) eine basische Verbindung ist, und ausgewählt ist aus der Gruppe bestehend aus aliphatischem, cycloaliphatischem oder heterocyclischem primären, sekundären oder tertiären Amin, aromatischem primären oder sekundären Amin, Imidazol, substituiertem Imidazol, Amid, Amidin, Komplex eines Bortrichlorids mit einem tertiären aliphatischen, cycloaliphatischen oder heterocyclischen Amin, merkaptanterminiertem Polyoxyalkylenether oder -ester, Estern einer Merkaptocarbonsäure mit polyvalenten Alkoholen enthaltend 2 bis 6 Kohlenstoffatome, einkernigem Phenol, mehrkernigem Phenol oder Novolak, der sich durch Kondensation eines einkernigen oder mehrkernigen Phenols mit Formaldehyd erhalten lässt.

11. Zusammensetzung gemäss Anspruch 1, worin das Gewichtsverhältnis zwischen radikalisch polymerisierbarer Verbindung a) und Epoxidharz B) von 1 : 0,05 bis 1 : 10 beträgt.

12. Zusammensetzung gemäss Anspruch 1, worin auf einen Gewichtsteil Epoxidharz 0,01 bis 0,5 Gewichtsteile Härter verwendet werden.

13. Verfahren zum Verkleben zweier undurchlässiger Oberflächen durch Aufbringen einer härtbaren Zusammensetzung auf wenigstens eine der Oberflächen und Kontaktierung beider Oberflächen, dadurch gekennzeichnet, dass man als härtbare Zusammensetzung eine Mischung gemäss Anspruch 1 verwendet und dass man durch die Kontaktierung der Anordnung den Zutritt von Sauerstoff ausschliesst, bis die Zusammensetzung erhärtet.

## Claims

1. A composition containing

A) an anaerobically polymerizable mixture which is stable on contact with oxygen but polymerizes when oxygen is excluded, said mixture containing

a) a free-radical-polymerizable acrylic ester

b) an organic free radical initiator, and

c) an organic accelerator of free radical polymerization, and

B) an epoxy resin, and

C) a curing agent for said epoxy resin selected from the group of basic curing agents, polymercaptans or polyphenols.

2. A composition according to claim 1, in which the polymerizable compound a) contains at least two groups of the formula I

$$CH_2{=}C(R^1){-}CO{-}O{-} \qquad (I)$$

in which $R^1$ is hydrogen, chlorine, methyl or ethyl.

3. A composition according to claim 2, in which the polymerizable compound a) is an acrylate or methacrylate of an aliphatic, cycloaliphatic, alicycloaliphatic, araliphatic, or heterocyclic aliphatic polyvalent alcohol, of a polyhydroxycarboxylic acid, of a polyhydroxyalkylamine, or of a polyhydroxyalkylnitrile or is an acrylic ester urethane or acrylic ester ureide.

4. A composition according to claim 1, in which the polymerizable compound a) is an acrylic ester of the formula II, of the formula IV or of the formula VI

$$CH_2{=}C(R^1){-}CO{-}O{-}\left[{-}(CH_2)_a{-}(CHR^2)_c{-}CH(R){-}O{-}\right]_b{-}CO{-}C(R^1){=}CH_2 \qquad (II)$$

$$\left[CH_2{=}C(R^4){-}CO{-}O{-}CH_2{-}CH(OH){-}CH_2{-}O{-}(CO)_c{-}\right]_e{-}R^5 \qquad (IV)$$

$$R^8{-}C(R^9){-}\left[CH_2{-}O{-}CO{-}C(R^1){=}CH_2\right]_2 \qquad (VI)$$

in which R is hydrogen, methyl, ethyl, hydroxymethyl or $—CH_2—O—CO—C(R^1)=CH_2$, in which $R^1$ is hydrogen, chlorine, methyl or ethyl, $R^2$ is hydrogen, —OH or $—O—CO—C(R^1) = CH_2$, in which $R^4$ is

hydrogen or methyl, $R^5$ is an e-valent organic radical which is linked to the radical molecule via a carbon atom other than a carbonyl carbon atom, in which $R^8$ is methyl, ethyl, hydroxymethyl or $CH_2{=}C(R^1){-}CO{-}O{-}CH_2{-}$, $R^9$ is hydroxymethyl or $-CH_2{-}O{-}CO{-}C(R^1){=}CH_2$, in which a is an integer from 1 to 8, b is an integer from 1 to 20 and c is 0 or 1 and in which e is 2, 3 or 4.

5. A composition according to claim 1, in which the organic free radical initiator b) is a hydroperoxide, a peroxide, an α-hydroxysulfone, an aromatic α-aminosulfone or a mixture of an organic amine oxide and an HN = acidic compound.

6. A composition according to claim 1, in which the organic accelerator for the free radical polymerization c) is selected from the group of aliphatic amines having at least two primary amino groups, or a ketimine of such an amine, a polyisocyanate, an aldimine, a tertiary amine, an imide, a sulfimide, a dithiocarbamate, an amide, a thioamide, a thiazole, a phosphoryl hydrazine, ascorbic acid, an organic phosphite, a quaternary ammonium salt, a base, a salt of a transition metal or a thiourea.

7. A composition according to claim 1, in which the amount of organic free radical initiator b is between 0.01 and 15 % by weight, based on the free-radical-polymerizable compound a), and in which the amount of organic accelerator for the free radical polymerization c) is between 1 and 10 % by weight, based on the free-radical-polymerizable compound a).

8. A composition according to claim 1, in which the epoxy resin B) contains at least two groups of the formula VIII

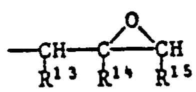

(VIII)

directly attached to an oxygen, nitrogen or sulfur atom, in which $R^{13}$ and $R^{15}$ are both hydrogen and $R^{14}$ is hydrogen or methyl, or in which $R^{13}$ and $R^{15}$ together are $-CH_2{-}CH_2$ and $R^{14}$ is then hydrogen.

9. A composition according to claim 8, in which the epoxy resin is a polyglycidyl ether of a bisphenol, of a novolak formed from formaldehyde and a phenol, or of an aliphatic diol, or in which the epoxy resin is a diglycidyl ester of a dicarboxylic acid, or an N,N'-diglycidyl derivative of a hydantoin.

10. A composition according to claim 1, in which the curing agent C) is a basic compound and is selected from the group consisting of aliphatic, cycloaliphatic or heterocyclic primary, secondary or tertiary amine, aromatic primary or secondary amine, imidazole, substituted imidazole, amide, amidine, complex of a boron trichloride with a tertiary aliphatic, cycloaliphatic or heterocyclic amine, mercaptan-terminated polyoxyalkylene ether or ester, esters of a mercaptocarboxylic acid with polyvalent alcohols containing 2 to 6 carbon atoms, mononuclear phenol, polynuclear phenol or novolak which can be obtained by condensation of a mononuclear or polynuclear phenol with formaldehyde.

11. A composition according to claim 1, in which the weight ratio between free-radical-polymerizable compound a) and epoxy resin B) is from 1 : 0.05 to 1 : 10.

12. A composition according to claim 1, in which 0.01 to 0.5 parts by weight of curing agent are used per part by weight of epoxy resin.

13. A method for bonding two impervious surfaces by applying a curable composition to at least one of the surfaces and holding both surfaces together, which comprises using a mixture according to claim 1 as the curable composition and excluding the access of oxygen by holding the arrangement together until the composition solidifies.

**Revendications**

1. Compositions qui comprennent :

A) un mélange polymérisable par voie anaérobie, c'est-à-dire qui reste stable au contact d'oxygène mais qui se polymérise à l'abri de l'oxygène, mélange qui contient :

a) un ester acrylique polymérisable par voie radicalaire,

b) un formateur de radicaux organique et

c) un accélérateur organique de la polymérisation radicalaire,

B) une résine époxyde et

C) un durcisseur de cette résine époxyde choisi parmi des durcisseurs basiques, des polymercaptans et des polyphénols.

2. Composition selon la revendication 1 dans laquelle le composé polymérisable a) a au moins deux groupes de formule I :

$$CH_2{=}C(R^1){-}CO{-}O{-} \qquad (I),$$

$R^1$ désignant l'hydrogène, le chlore ou le groupe méthyle ou éthyle.

3. Composition selon la revendication 2 dans laquelle le composé polymérisable a) est un acrylate ou un méthacrylate d'un polyol aliphatique, cycloaliphatique, alicycloaliphatique, araliphatique ou hétérocyclique-aliphatique, d'un acide polyhydroxycarboxylique, d'une polyhydroxyalkylamine ou d'un polyhydroxyalkylnitrile, ou encore un ester-uréthanne ou -uréide acrylique.

4. Composition selon la revendication 1 dans laquelle le composé polymérisable a) est un ester acrylique de formule II, IV ou VI ci-dessous :

$$CH_2{=}C(R^1){-}CO{-}O{-}\left[(CH_2)_a{-}(CHR^2)_c{-}CH(R){-}O\right]_b{-}CO{-}C(R^1){=}CH_2 \quad (II)$$

$$\left[CH_2{=}C(R^4){-}CO{-}O{-}CH_2{-}CH(OH){-}CH_2{-}O{-}(CO)_c\right]_e{-}R^5 \quad (IV)$$

$$R^8{-}C(R^9){-}\left[CH_2{-}O{-}CO{-}C(R^1){=}CH_2\right]_2 \quad (VI)$$

formules dans lesquelles R désigne l'hydrogène, le groupe méthyle, éthyle, hydroxyméthyle ou un groupe $-CH_2-O-CO-C(R^1)=CH_2$, $R^1$ étant l'hydrogène, le chlore ou le groupe méthyle ou éthyle, $R^2$ désigne l'hydrogène, le groupe $-OH$ ou un groupe $-O-CO-C(R^1)=CH_2$, $R^4$ l'hydrogène ou le groupe méthyle, $R^5$ un radical organique de valence e lié au reste de la molécule par un atome de carbone ne faisant pas partie d'un groupe carbonyle, $R^8$ désigne le groupe méthyle, éthyle, hydroxyméthyle ou un groupe $CH_2=C(R^1)-CO-O-CH_2-$, $R^9$ un groupe hydroxyméthyle ou $-CH_2-O-CO-C(R^1)=CH_2$, a est un entier de 1 à 8, b un entier de 1 à 20, c le nombre 0 ou 1 et e le nombre 2, 3 ou 4.

5. Composition selon la revendication 1 dans laquelle le formateur de radicaux b) est un hydroperoxyde, un peroxyde, une α-hydroxysulfone, une α-aminosulfone aromatique ou un mélange d'un aminoxyde organique et d'un HN = acide.

6. Composition selon la revendication 1 dans laquelle l'accélérateur de la polymérisation radicalaire c) est choisi parmi des amines aliphatiques à au moins deux groupes amino primaires ou des cétimines de ces amines, des polyisocyanates, une aldimine, une amine tertiaire, un imide, un sulfimide, un dithiocarbamate, un amide, un thioamide, un thiazole, une phosphorylhydrazine, l'acide ascorbique, un phosphite organique, un sel ou une base d'ammonium quaternaire, un sel d'un métal de transition ou une thio-urée.

7. Composition selon la revendication 1 dans laquelle la proportion du formateur de radicaux b) est de 0,01 à 15 % du poids du composé polymérisable a), et celle de l'accélérateur c) de 1 à 10 % du poids de ce composé polymérisable.

8. Composition selon la revendication 1 dans laquelle la résine époxyde B) a au moins deux groupes de formule VIII :

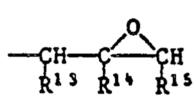

(VIII)

directement liés à un atome d'oxygène, d'azote ou de soufre, $R^{13}$ et $R^{15}$ dans cette formule étant des atomes d'hydrogène et $R^{14}$ l'hydrogène ou un méthyle, ou bien $R^{13}$ et $R^{15}$ forment ensemble un groupe $-CH_2-CH_2-$ et $R^{14}$ est alors l'hydrogène.

9. Composition selon la revendication 8 dans laquelle la résine époxyde est un éther polyglycidylique d'un bisphénol, d'une novolaque de formaldéhyde et d'un phénol ou bien d'un diol aliphatique, ou encore dans laquelle la résine époxyde est un ester diglycidylique d'un acide dicarboxylique ou un dérivé N,N'-diglycidylique d'une hydantoïne.

10. Composition selon la revendication 1 dans laquelle le durcisseur C) est un composé basique choisi parmi une amine primaire, secondaire ou tertiaire, aliphatique, cycloaliphatique ou hétérocyclique, une amine aromatique primaire ou secondaire, un imidazole éventuellement substitué, un amide, une amidine, un complexe de trichlorure de bore avec une amine tertiaire aliphatique, cycloaliphatique ou hétérocyclique, un éther ou un ester polyoxyalkylénique à groupes mercaptans terminaux, des esters d'un acide mercaptocarboxylique et de polyols ayant de 2 à 6 atomes de carbone, un phénol monocyclique ou polycyclique ou une novolaque formée par condensation avec le formaldéhyde d'un phénol monocyclique ou polycyclique.

11. Composition selon la revendication 1 dans laquelle le rapport pondéral du composé polymérisable a) à la résine époxyde B) est compris entre 1 : 0,05 et 1 : 10.

12. Composition selon la revendication 1 qui contient de 0,01 à 0,5 partie en poids du durcisseur par partie de la résine époxyde.

13. Procédé de collage de deux surfaces étanches par application d'une composition durcissable sur l'une des surfaces ou sur les deux et mise en contact des deux surfaces, procédé caractérisé en ce que l'on utilise comme composition durcissable un mélange selon l'une quelconque des revendications précédentes, en excluant la présence d'oxygène par la mise en contact des surfaces jusqu'à ce que la composition soit durcie.